# EUROPÄISCHE PATENTSCHRIFT

(11) **EP 1 208 573 B1**
(45) Veröffentlichungstag und Bekanntmachung des Hinweises auf die Patenterteilung: **10.11.2004**
(21) Anmeldenummer: 00960356.4
(22) Anmeldetag: 21.08.2000
(51) Int. Cl.: H01G 9/15, H01G 9/052, H01G 9/012

(54) **ANODE FÜR ELEKTROLYTKONDENSATOREN, ELEKTROLYT-KONDENSATOR UND VERFAHREN ZUR HERSTELLUNG DER ANODE**
ANODE FOR ELECTROLYTIC CAPACITORS, ELECTROLYTIC CAPACITOR AND METHOD OF PRODUCING SAID ANODE
ANODE POUR CONDENSATEURS ELECTROLYTIQUES, CONDENSATEUR ELECTROLYTIQUE ET PROCEDES DE PRODUCTION DE L'ANODE

(30) Priorität: 30.08.1999 DE 19941094
(43) Veröffentlichungstag der Anmeldung: 29.05.2002
(60) Teilanmeldung: 04017526.7
(73) Patentinhaber: EPCOS AG, 81669 München (DE)
(72) Erfinder: CLASEN, Helge, D-89075 Ulm (DE); KNABE, Willy, D-89522 Heidenheim (DE); GNANN, Klaus, 89129 Langenau (DE); GERBLINGER, Josef, D-86637 Wertingen (DE); HAHN, Dieter, D-92421 Schwandorf (DE)
(74) Vertreter: Epping Hermann & Fischer
(86) Internationale Anmeldenummer: PCT/DE2000/002845
(87) Internationale Veröffentlichungsnummer: WO 2001/016973

(56) Entgegenhaltungen:
- US-A- 3 412 444
- US-A- 3 465 426
- US-A- 4 761 714
- US-A- 5 075 940

## Beschreibung

Die vorliegende Erfindung betrifft eine Anode für Elektrolytkondensatoren mit einem Anodenkörper und einem Anodenableiter. Ferner betrifft die Erfindung einen Elektrolyt-Kondensator mit der Anode, einem die Anode umgebenden Dielektrikum, einer auf dem Dielektrikum vorgesehenen Schichtkathode, einer aus dem Anodenableiter geformten ersten Anschlußlasche und einer mit der Schichtkathode verbundenen zweiten Anschlußlasche. Ferner betrifft die vorliegende Erfindung Verfahren zur Herstellung der Anode.

Bei dem Kondensator handelt es sich vorzugsweise um einen Chipkondensator. Jedoch ist die vorliegende Erfindung ohne weiteres auch auf andere Kondensatoren, wie beispielsweise gehäuselose Kondensatoren, anwendbar. Ein gehäuseloser Kondensator hat eine geringe Bauhöhe und wird beispielsweise in eine Hybridschaltung integriert. Im folgenden soll jedoch davon ausgegangen werden, daß der erfindungsgemäße Kondensator ein Chipkondensator ist.

Chipkondensatoren, insbesondere Tantal-Chipkondensatoren zeichnen sich durch ein hohes volumenspezifisches Kapazitäts-Spannungs-Produkt, auch "CV-Produkt" genannt, aus. Das heißt, bei diesen Kondensatoren ist der Wert des auf das Volumen bezogenen Produktes aus Kapazität und an den Kondensator anlegbarer Spannung besonders groß. Weitere vorteilhafte Eigenschaften von Chipkondensatoren liegen in einem stabilen Temperatur- und Frequenzverhalten, einem niedrigen Reststrom und einem kleinen Verlustfaktor.

Infolge dieser hervorragenden Eigenschaften werden speziell Tantal-Chipkondensatoren für eine Vielzahl von Anwendungen auf den verschiedensten Gebieten eingesetzt. Neue Anwendungen, anspruchsvolle Einsatzbedingungen und eine zunehmende Miniaturisierung in der Elektronik lassen die Anforderungen an Chipkondensatoren ständig größer werden.

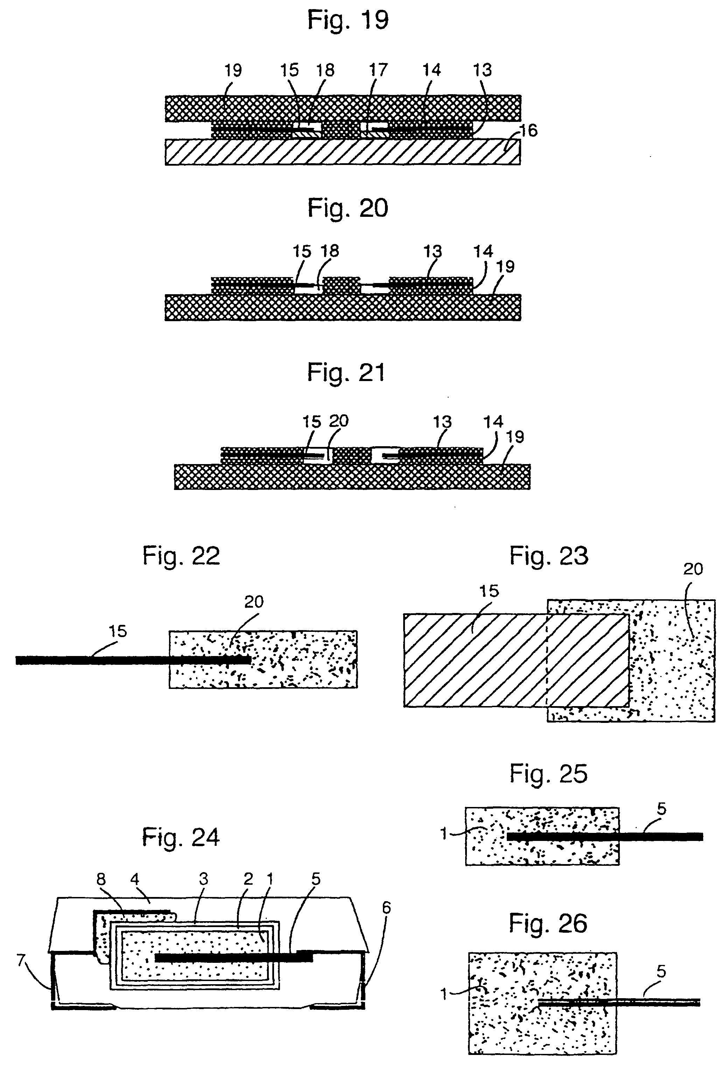

Fig. 24 zeigt den Aufbau eines herkömmlichen Tantal-Chipkondensators in einem schematischen Schnitt, während in Fig. 25 der Anodenkörper dieses Chipkondensators in seitlicher Ansicht und in Fig. 26 der Anodenkörper in Draufsicht gezeigt ist.

Dieser herkömmliche Chipkondensator besteht aus dem Anodenkörper 1, einem Dielektrikum 2 und einer Schichtkathode 3, die ein eigentliches Kondensatorelement bilden.

Außerdem ist ein Gehäuse 4 vorgesehen, das wichtige Schutzfunktionen für das Kondensatorelement übernimmt.

Zu dem Kondensatorelement aus dem Anodenkörper 1, dem Dielektrikum 2 und der Schichtkathode 3 führt ein Tantaldraht 5, der im Inneren des Gehäuses 4 mit einer ersten Metallasche 6 verbunden ist. Mittels eines Leitklebers 8 ist die Schichtkathode 3 an eine zweite Metallasche 7 angeschlossen, die wie die Metallasche 6 aus dem Gehäuse 4 herausgeführt ist.

Derartige Chipkondensatoren werden in unterschiedlichen Größen des Gehäuses 4 mit meist genormten Grundflächenmaßen und Bauhöhen gefertigt. Folglich muß zur Erzielung eines höheren CV-Produktes der Volumenanteil des Kondensatorelementes bzw. des in diesem enthaltenen Anodenkörpers 1 gesteigert werden.

Aufgrund der Verwendung des Tantaldrahtes 5 im Anodenkörper 1 (vgl. hierzu insbesondere auch die Fig. 25 und 26) als anodenseitigem Ableiter kann die Gehäuseausnutzung kaum noch gesteigert werden. Das freie Ende des Tantaldrahtes 5 wird nämlich an die Metallasche 6 geschweißt, die beim fertigen Chipkondensator den elektrischen Anschluß an eine elektronische Schaltung auf einer Leiterplatte zusammen mit der anderen Metallasche übernehmen soll. Bei einer derartigen Bauweise ist speziell plusseitig der Abstand zwischen dem Kondensatorelement und der Gehäusewand besonders groß. Der durch den Tantaldraht 5 gebildete Abstand zwischen der plusseitigen Metallasche 6 und dem Kondensatorelement bzw. dem Anodenkörper 1 kann fertigungsbedingt kaum weiter verringert werden. Mit anderen Worten, bei dem bekannten Chipkondensator wird das Gehäusevolumen nur unzureichend ausgenutzt.

Aus der Druckschrift US 4 761 714 A ist eine Anode bekannt, die einen Anoderkörper und einen flächigen Anodenableiter, der die Form eines Blechstreifens mit einem Verhältnis Breite/Dicke zwischen 2 und 100 aufweist. Der Anodenkörper ist aus einem kontinuierlich verformbaren Material, das Verfestight werden kann, an den Anodenableiter angeformt.

Aus der Druckschrift DD-PS 215 420 ist ein Tantal-Chip-Kondensator bekannt, bei dem ein Anodenableiter in einen zweiteiligen, durch Strangpressen vorgefertigten Anodenkörper eingebettet wird. Anschließend wird der Anodenkörper mit dem Anodenableiter gesintert. Die Verwendung von zwei vorgepressten Teil-Anodenkörpern hat den Nachteil, daß aufgrund fertigungsbedingter Toleranzen keine exakte Formschlüssigkeit des Anodenkörpers mit dem Anodenableiter erreicht werden kann. Dadurch verschlechtert sich der elektrische Kontakt zwischen Anodenkörper und Anodenableiter.

Aus der Druckschrift DE 36 34 103 A1 ist ferner ein Tantalkondensator bekannt, bei dem ein drahtförmiger Anodenableiter von einem Tantalpulver umpresst ist. Dieser Kondensator hat den Nachteil einer geringen Kontaktfläche zwischen dem drahtförmigen Anodenableiter und dem Anodenkörper. Daraus resultiert ein erhöhter ohmscher Widerstand des Kondensators, der 'die elektrischen Werte des Kondensators negativ beeinflussen kann. Dieser Effekt ist unerwünscht.

Es ist ferner aus der Druckschrift US 3,903,589 ein Tantalkondensator bekannt, dessen Anode durch Eintauchen des Anodenableiters in eine metallpulverhaltige Dispersion hergestellt wird. Beim Herausziehen des Anodenableiters aus der Dispersion bleibt ein Tropfen auf dem Anodenableiter hängen, der danach getrocknet und gesintert wird. Dieser Tantalkondensator hat den Nachteil, daß der Anodenkörper nicht mit einer definierten Geometrie herstellbar ist. Der bekannte Kondensator hat aufgrund der fehlenden optimierten Anodengeometrie und der weiten Toleranzen eine schlechte Volumenausnutzung.

Ziel der vorliegenden Erfindung ist es daher, eine Anode anzugeben, die eine große Kontaktfläche zwischen dem Anodenableiter und dem Anodenkörper aufweist, deren Anodenkörper eine fest vorgegebene Form hat und bei der ein guter elektrischer Kontakt zwischen dem Anodenkörper und dem Anodenableiter besteht.

Die Erfindung gibt eine Anode gemäß Anspruch 1.

Ferner gibt die Erfindung einen Kondensator an, bei dem der Anodenkörper von einem Dielektrikum umgeben ist, bei dem auf dem Dielektrikum eine Schichtkathode vorgesehen ist, bei dem ein weiterer Endabschnitt des Anodenableiters zu einer ersten Anschlußlasche geformt ist und bei dem die Schichtkathode mit einer zweiten Anschlußlasche verbunden ist.

Die erfindungsgemäße Anode hat den Vorteil, daß durch Anformen des gesamten Anodenkörpers in Form eines kontinuierlich verformbaren Materials an den Anodenableiter ein homogener Anodenkörper mit einer guten Formschlüssigkeit zum Anodenableiter sowie mit einem guten elektrischen Kontakt zum Anodenableiter gestaltet werden kann.

Ferner hat die erfindungsgemäße Anode den Vorteil, daß durch die Formgebung des Anodenkörpers mit Hilfe eines kontinuierlich verformbaren Materials eine beliebige Formgebung mit Hilfe entsprechender Formen, die vor oder nach dem Verfestigen des Anodenkörpers entfernt werden, erfolgen kann. Das Material, aus dem der Anodenkörper gebildet wird, kann beispielsweise eine metallpulverhaltige Paste, eine aus der Paste hergestellte Grünfolie oder ein geeignetes Metallpulver selbst sein.

Durch die flächige Gestaltung des Anodenableiters, der in den Anodenkörper aus beispielsweise gesintertem Tantalpulver eingesintert ist, wird im Vergleich zu einem eingesinterten Tantaldraht bei gleicher Querschnittsfläche eine größere Kontaktfläche zwischen Anodenableiter und Anodenkörper erreicht. Die Anzahl der Pulverpartikel, die die Oberfläche des Anodenableiters berühren, ist erhöht, und damit wird die durchschnittliche Länge der aus miteinander versinterten Tantalpartikeln bestehenden Strompfade zwischen dem Dielektrikum und dem Anodenableiter reduziert. Als Folge hiervon können verringerte Widerstandswerte und eine erhöhte Kapazität bei hohen Frequenzen erreicht werden.

Die Verwendung eines flächigen Anodenableiters im Anodenkörper verringert außerdem bei Stromfluß die Gefahr einer lokalen Überhitzung an den Übergängen zwischen dem Anodenableiter und einem durch die versinterten Tantalpartikel gebildeten feinen Netzwerk. An diesen Übergängen treten nämlich höhere Stromdichten als im sich anschließenden Netzwerk auf. Solche lokalen Überhitzungen können eine Ursache für plötzlich auftretendes und dramatisch verlaufendes Abbrennen von Chipkondensatoren sein.

Wesentlich an dem erfindungsgemäßen Kondensator bzw. Anode ist insbesondere die Verwirklichung einer festen und großflächigen Verbindung zwischen dem Anodenkörper aus einem kapazitätsbildenden, offenporigen Sinterkörper und einem Anodenableiter mit großer Oberfläche. Für alle diese Komponenten wird bevorzugt Tantal oder auch ein anderes geeignetes Metall wie Niob oder ein Material eingesetzt, das die Ausbildung einer Schicht mit einer hohen Dielektrizitätskonstante gestattet.

Es ist darüber hinaus eine Anode vorteilhaft, bei der der Anodenkörper einen Endabschnitt des Anodenableiters vollständig umschließt. Dadurch kann eine optimale Ausnutzung der Oberfläche des Anodenableiters zur Kontaktierung des Anodenkörpers erzielt werden. Des weiteren ist dadurch eine hohe mechanische Stabilität der Anode gewährleistet.

Ferner gibt die Erfindung ein Verfahren zur Herstellung der erfindungsgemäßen Anode an, wobei ein kontinuierlich verformbares Material, das verfestigt werden kann, unter gleichzeitiger äußerer Formgebung an einen flächigen Anodenableiter angeformt und anschließend zur Bildung eines Anodenkörpers verfestigt wird. Durch das gleichzeitige Anformen des Materials an den Anodenableiter und das Definieren der äußeren Form des Anodenkörpers mit Hilfe eines kontinuierlich verformbaren Materials entfallen aufwendige Nachbearbeitungsprozesse zur Formgebung des Anodenkörpers.

Es ist ein Verfahren besonders vorteilhaft, wobei eine Paste, die ein Bindersystem und ein Pulver enthält, auf den Anodenableiter aufgetragen und sodann getrocknet und gesintert wird. Die Paste kann dabei mittels unterschiedlicher Methoden mit dem Anodenableiter zu einer Anode gestaltet werden. Es kann beispielsweise eine aus der Druckschrift DE 199 27 909 A1 bekannte Paste, bestehend aus einer diskreten Phase mit einem Metallpulver und einer kontinuierlichen Phase mit organischen Verbindungen verwendet werden.

Der erfindungsgemäße Kondensator ist SMD-fähig (SMD = Surface Mounted Device). Durch die Verwendung einer Paste ist die Verarbeitung von hoch- und höchstkapazitiven Tantalpulvern vereinfacht.

Ferner gibt die Erfindung ein Verfahren zur Herstellung der erfindungsgemäßen Anode an, wobei ein flächiger Anodenableiter mit einem Pulver umpresst wird, aus dem der Anodenableiter an einer Seite herausragt. Anschließend wird der Preßling gesintert. Das erfindungsgemäße Verfahren kann vorteilhaft so durchgeführt werden, daß ein Anodenableiter in Form eines streifenförmigen Blechs in eine in einer Preßmatrize befindlichen Schüttung aus dem Pulver eingeschoben wird und danach der Preßvorgang erfolgt.

Das für den Anodenableiter bevorzugt verwendete Material Tantal ist sehr teuer, so daß der für das Verfahren verwendete Streifen möglichst dünn sein sollte. Andererseits muß das verwendete Tantalblech eine ausreichende mechanische Stabilität aufweisen, so daß es in die Pulverschüttung eingeschoben und später zu einer mechanisch stabilen Lasche gebogen werden kann. Unter diesen Randbedingungen haben sich streifenförmige Anodenableiter einer Breite zwischen 0,3 und 5 mm und einer Dicke zwischen 50 und 150 µm als geeignet erwiesen. Diese Anodenableiter weisen ein Verhältnis Breite/Dicke zwischen 2 und 100 auf.

Das Pressen des Pulvers kann besonders vorteilhaft durch Querpressen erfolgen, d. h. durch Pressen quer zu der Richtung, in der sich der streifenförmige Anodenableiter erstreckt.

Die weiteren Fertigungsschritte entsprechen der konventionellen Tantal-Chipkondensatorfertigung. So wird in der Formierung genannten Prozedur auf der inneren und äußeren Oberfläche des gesinterten Anodenkörpers das Dielektrikum aus Tantalpentoxid gebildet. Nach dem Aufbringen der Kathodenschichten folgt die Herstellung von Kathodenanschluß und Gehäuse. Die dem plusseitigen elektrischen Anschluß dienende Anodenlasche aus Tantal kann in der erfindungsgemäßen Ausführung zum Zwecke der Löt- oder Verklebbarkeit nachbehandelt werden, was auch für die anderen Ausführungsbeispiele gilt.

In Abwandlung der obigen erfindungsgemäßen Ausführung des Tantal-Chipkondensators wird das Tantalpulver noch mit einem Additiv versetzt, das aufgrund seiner Schmierwirkung den Preßvorgang leichter gestaltet und das Preßwerkzeug schont. Auch werden die Rieselfähigkeit des Pulvers und die mechanische Stabilität des Preßlings durch die Bindewirkung des Additivs verbessert. Ein übliches Additiv ist Kampfer. Es sollte vor dem Sintern des Preßlings nach Möglichkeit rückstandsfrei entfernt werden.

Anstelle von Tantal können auch andere Metalle, wie beispielsweise Niob, oder auch Legierungen von Metallen oder auch andere Materialien, die die Fähigkeit zur Ausbildung eines Dielektrikums besitzen, verwendet werden.

Nachfolgend wird die Erfindung anhand der Zeichnungen näher erläutert. Es zeigen:
- Fig. 1 bis 3: schematische Darstellungen zur Erläuterung eines ersten Ausführungsbeispiels der Erfindung,
- Fig. 4 bis 6: schematische Darstellungen zur Erläuterung eines zweiten Ausführungsbeispiels der Erfindung,
- Fig. 7 bis 13: schematische Darstellungen zur Erläuterung eines ersten Verfahrens zum Herstellen eines Anodenkörpers,
- Fig. 14 und 15: schematische Darstellungen zur Erläuterung einer Abwandlung des Verfahrens nach den Fig. 7 bis 13,
- Fig. 16 bis 23: schematische Darstellungen zur Erläuterung eines zweiten Verfahrens zum Herstellen eines Anodenkörpers und
- Fig. 24 bis 26: schematische Darstellungen zur Erläuterung eines herkömmlichen Chipkondensators.

Die Fig. 24 bis 26 sind bereits eingangs beschrieben worden. In den Figuren werden einander entsprechende Bauteile jeweils mit den gleichen Bezugszeichen versehen.

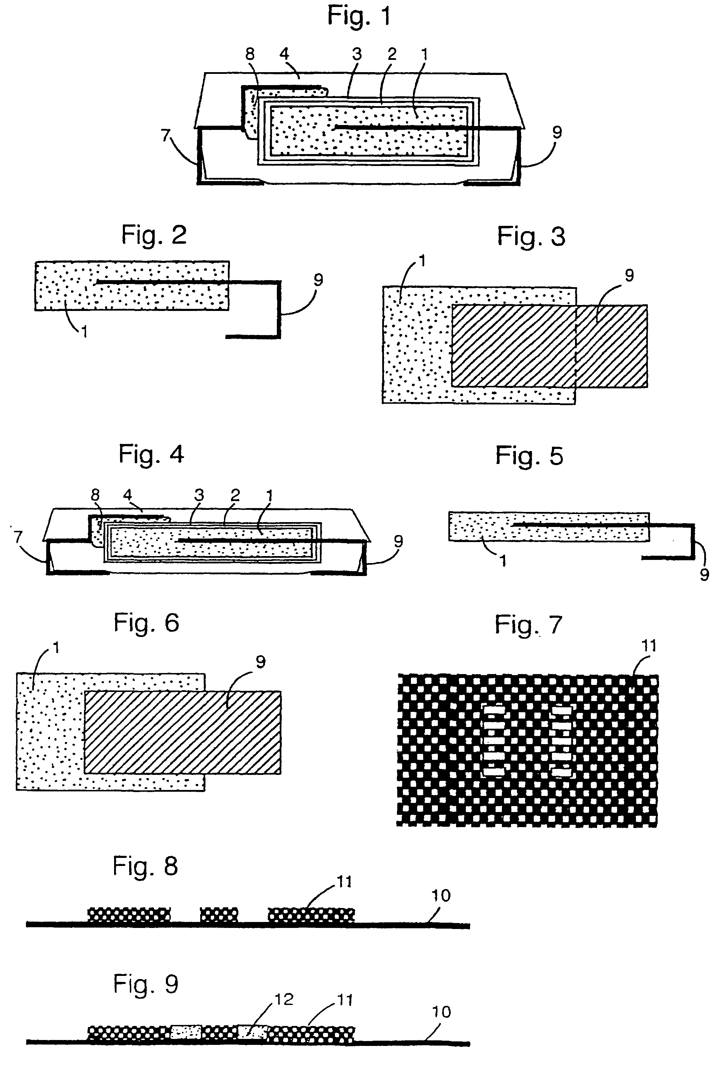

Fig. 1 zeigt einen erfindungsgemäßen Chipkondensator mit einem eigentlichen Kondensatorelement aus einem Anodenkörper 1, einem Dielektrikum 2, einer Schichtkathode 3 und einem flächigen Anodenableiter 9, der in den Anodenkörper 1 hineinreicht. Der Anodenkörper 1 besteht aus einem porösen Metallsinterkörper, der, wie weiter unten noch näher erläutert werden wird, aus einer metallpulverhaltigen Paste, die getrocknet und gesintert ist, aufgebaut wird und dabei eine feste und großflächige Verbindung mit dem Anodenableiter 9 herstellt.

Der Anodenableiter 9 wird vorzugsweise aus Tantal hergestellt, das in vorteilhafter Weise auch als Metall für das Metallpulver der Paste verwendet wird.

Die Schichtkathode 3 ist wie bei dem herkömmlichen Chipkondensator der Fig. 24 über einen Leitkleber 8 mit der Metallasche 7 verbunden.

Der Anodenableiter 9 erfüllt die Funktionen des Tantaldrahtes 5 sowie der Metallasche 6 des herkömmlichen Chipkondensators von Fig. 24: er ist hierzu zu einer Kontaktlasche gebogen bzw. ausgebildet (vgl. insbesondere Fig. 2 und 3), wodurch plusseitig der Abstand zwischen dem Kondensatorelement und dem Rand des Gehäuses 4 verringert werden kann. Das Volumen des Gehäuses 4 des Bauelementes wird somit besser ausgenutzt, um in vorteilhafter Weise ein höheres CV-Produkt zu erzielen. Auch kann bei gleichbleibendem Volumen des Anodenkörpers 1 eine kleinere Größe für das Gehäuse 4 gewählt werden. Bei gleicher Größe des Gehäuses 4 kann durch die Erfindung das Kondensatorelement bzw. der Anodenkörper 1 größer gestaltet werden als beim Stand der Technik nach den Figuren 24 bis 26.

Der erfindungsgemäße Chipkondensator mit dem flächigen Anodenableiter 9 im Anodenkörper 1 erlaubt die Herstellung äußerst flacher Kondensatorelemente, wie dies schematisch aus den Fig. 4 bis 6 zu ersehen ist. Die Fig. 5 zeigt dabei wie die Fig. 2 eine seitliche Ansicht des Anodenkörpers 1 mit dem Anodenableiter 9, während in der Fig. 6, ähnlich wie in der Fig. 3, eine Draufsicht auf den Anodenkörper 1 mit dem Anodenableiter 9 dargestellt ist. Allerdings ist in den Fig. 3 und 6 der Anodenableiter 9 in seiner gesamten Ausdehnung dargestellt, obwohl er an sich teilweise durch den Anodenkörper 1 abgedeckt ist.

Durch die flache Ausführung entsprechend dem Ausführungsbeispiel der Fig. 4 bis 6 wird eine besonders große Mantelfläche erhalten, was kurze Strompfade ermöglicht und eine Verbesserung der elektrischen Eigenschaften bewirkt. Auch können die äußerst flachen Kondensatorelemente gegebenenfalls ohne Gehäuse in Hybridschaltungen integriert werden.

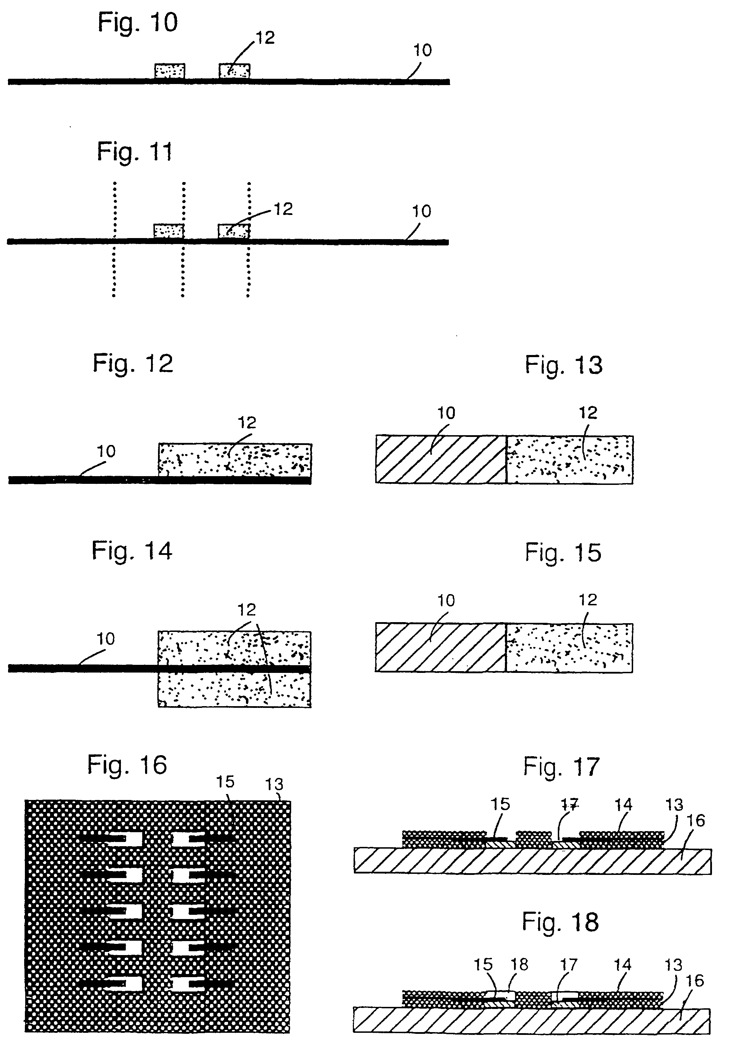

Für die Herstellung eines Anodenkörpers wird eine Paste aus einem Bindersystem und einem Tantalpulver auf eine Tantalfolie oder ein Tantalblech 10 der Dicke 50 bis 150 µm unter Verwendung einer Schablone 11 gedruckt. Fig. 7 zeigt eine Draufsicht dieser Schablone 11, während in Fig. 8 eine Seitensicht des Tantalbleches 10 zusammen mit der Schablone 11 gezeigt und in Fig. 9 die Schablone 11 mit Tantalpaste 12 gefüllt ist. Das Tantalblech 10 zusammen mit der aufgerakelten bzw. aufgedruckten Tantalpaste 12 wird nach Entfernen der Schablone 11 getrocknet und gesintert, so daß die in Fig. 10 in Seitenansicht gezeigte Anordnung erhalten wird.

Die Anordnung von Fig. 10 wird schließlich längs der Punktlinien (vgl. Fig. 11) zugeschnitten, so daß auf diese Weise Anodenkörper erhalten werden, die mit dem Tantalblech 10 verbunden sind. Fig. 12 zeigt eine Seitensicht eines solchen Anodenkörpers mit einem Tantalblech 10, während in Fig. 13 eine Draufsicht hiervon dargestellt ist.

Gegebenenfalls kann das Zuschneiden in die einzelnen Anodenkörper (vgl. Fig. 11) bei ausreichender Trocknung auch vor dem Sintern erfolgen.

Die sich anschließenden Verfahrensschritte entsprechen der herkömmlichen Tantal-Chipkondensatorfertigung. So wird in einer Formierung genannten Prozedur auf der inneren und äußeren Oberfläche des gesinterten Anodenkörpers 1 das Dielektrikum 2 aus Tantalpentoxid gebildet. Nach dem Aufbringen der Schichtkathode 3 folgt die Herstellung von Kathodenanschluß bzw. Metallasche 7 und Gehäuse 4. Die als plusseitiger elektrischer Anschluß dienende Anodenlasche aus dem Anodenableiter 9 aus Tantal kann zum Zwecke der Verbesserung der Löt- bzw. Verklebbarkeit noch nachbehandelt werden.

In Abwandlung des Ausführungsbeispiels der Fig. 7 bis 13 ist es möglich, das Tantalblech 10 beidseitig mit der Tantalpaste 12 zu bedrucken, was in einem Arbeitsgang erfolgen kann. Beim Bedrucken in zwei Schritten wird nach dem Bedrucken der ersten Seite oder Hauptfläche des Tantalbleches 10 die auf diese Seite aufgetragene Paste vorgetrocknet. Unabhängig davon, ob das Bedrucken in einem Arbeitsgang oder in zwei Arbeitsgängen vorgenommen wird, wird schließlich eine Anordnung erhalten, wie diese in den Fig. 14 und 15 dargestellt ist, wobei Fig. 14 eine Seitensicht zeigt, während in Fig. 15 eine Draufsicht auf das Tantalblech 10 mit dem aus zwei Teilen bestehenden Anodenkörper gezeigt ist.

Die Herstellung des Anodenkörpers für den Chipkondensator ist auch durch Siebdrucken möglich, wozu eine Paste aus einem Bindersystem und Tantalpulver auf eine Tantalfolie oder ein Tantalblech 10 der Dicke 50 bis 150 µm siebgedruckt wird. Das Tantalblech 10 mit der siebgedruckten Tantalpaste 12 wird wie in den vorangehenden Beispielen getrocknet und gesintert.

Nach dem Sintern wird das Tantalblech 10 zugeschnitten. Auf diese Weise werden einzelne Anodenkörper mit einem Anodenableiter aus Tantalblech 10 oder Tantalfolie entsprechend den Fig. 12 und 13 erhalten. Auch hier kann das Zuschneiden bei ausreichender Trocknung vor dem eigentlichen Sintern erfolgen.

Die weiteren Verfahrensschritte werden in der oben erläuterten Weise ausgeführt.

Das Siebdrucken auf das Tantalblech 10 ist auch beidseitig möglich, was gegebenenfalls in einem Arbeitsgang erfolgen kann. Wird das Drucken in zwei Schritten vorgenommen, so kann nach dem Bedrucken der ersten Seite oder Hauptfläche, des Tantalbleches 10 mit der Paste ein Vortrocknen vorgenommen werden. Auf diese Weise wird schließlich die in den Fig. 14 und 15 gezeigte Anordnung mit dem Tantalblech 10 und den zu Anodenkörpern gesinterten Tantalpasten 12 erhalten.

Bei einem anhand der Fig. 16 bis 23 erläuterten Ausführungsbeispiel der Erfindung wird ein Anodenableiter von einer Metallpulverpaste komplett eingefaßt, so daß der Anodenableiter nur auf einer Seite aus einem aus der Metallpulverpaste durch Trocknen und Sintern erzeugten Anodenkörper 20 herausragen kann, wie dies zunächst in den Fig. 22 und 23 in Seitensicht bzw. Draufsicht gezeigt ist. Für die Herstellung einer solchen Anordnung kann ein mehrstufiges Schablonenverfahren eingesetzt werden, bei dem zunächst zwischen zwei Lochmasken 13, 14 Streifen 15 aus Tantalfolie oder Tantalblech mit einer Dicke von 50 bis 150 µm plaziert werden. Fig. 16 zeigt eine Draufsicht auf die Lochmaske 13 mit den Streifen 15, während in Fig. 17 eine Seitensicht der Lochmasken 13, 14 mit den Streifen 15 auf einer ersten Basisplatte 16 dargestellt ist. Der Anteil des Streifens 15, der in das Loch der Lochmasken 13, 14 hineinragt, kann durch einen Abstandhalter 17 abgestützt werden (vgl. Fig. 17). Dieser Abstandhalter 17 kann gegebenenfalls auch Teil der Basisplatte 16 sein oder auf ihr fixiert werden.

Nach dem Vortrocknen einer eingerakelten Paste 18 (vgl. Fig. 18) wird eine weitere Basisplatte 19 aufgelegt (vgl. Fig. 19), die erste Basisplatte 16 mit den Abstandhaltern 17 wird entfernt (vgl. Fig. 20), und es wird ein zweites Mal Metallpulverpaste eingerakelt (vgl. Fig. 21). Nach dem Ausformen werden ein Trocknen und Sintern vorgenommen. Auf diese Weise können die Anordnungen der Fig. 22 und 23 mit dem Anodenkörper 20 erhalten werden.

Alternativ ist es für die Herstellung eines Chipkondensators auch möglich, einen Streifen aus Tantalfolie oder Tantalblech mit einer Dicke von 50 bis 150 µm mit einer Paste aus einem Bindersystem und einem Tantalpulver zu umspritzen, zu umpressen oder zu umgießen. Nach einem Ausformen wird der so erhaltene Anodenkörper getrocknet und gesintert. Auf diese Weise werden einzelne Anodenkörper mit einem Anodenableiter aus Tantalfolie oder Tantalblech entsprechend den Fig. 22 (Seitensicht) und 23 (Draufsicht) erhalten, welche in der oben erläuterten Weise weiterbehandelt werden.

Schließlich kann zur Herstellung eines Anodenkörpers auch aus einer Paste, die aus einem Bindersystem und Tantalpulver besteht, eine elastische, folienartige Masse (Grünfolie) vorgefertigt werden, welche zugeschnitten und mit der Tantalfolie oder dem Tantalblech mit einer Dicke von 50 bis 150 µm verklebt wird. Nach einem Trocknen und Sintern werden einzelne Anodenkörper mit einem Anodenableiter aus Tantalfolie oder Tantalblech erhalten, wie diese in den Fig. 22 und 23 dargestellt sind.

Die durch das weiter oben beschriebene Preßverfahren mit Pulver hergestellten Anodenkörper sehen genauso aus, wie die in Fig. 22 und Fig. 23 dargestellten.

## Patentansprüche

1. Anode für einen Elektrolyt-Kondensator mit einem Anodenkörper (1, 20) einer fest vorgegebenen Form und mit einem flächigen Anodenableiter (9), der die Form eines Blechstreifens mit einem Verhältnis Breite/Dicke zwischen 2 und 100 aufweist,
- bei der der Anodenkörper (1, 20) zu beiden Seiten, oder Hauptflächen, des Blechstreifens angeordnet ist und
- bei der der Anodenkörper (1, 20) aus einem kontinuierlich verformbaren Material, das verfestigt werden kann, an den Anodenableiter (9) angeformt ist.

2. Anode nach Anspruch 1,
bei der der Anodenkörper (1; 20) einen Endabschnitt des Anodenableiters (9) vollständig umschließt.

3. Anode nach Anspruch 1 oder 2,
bei der der Anodenkörper (1; 20) aus einem offenporigen Sinterkörper besteht.

4. Anode nach Anspruch 3,
bei der der Sinterkörper aus einem Metall wie Tantal oder Niob oder einer Metall-Legierung oder einem anderen Material hergestellt ist, das zur Ausbildung eines Dielektrikums fähig ist.

5. Anode nach einem der Ansprüche 1 bis 4,
bei der der Anodenableiter (9) aus einem Metall wie Tantal oder Niob oder einer Metall-Legierung oder einem anderen Material hergestellt ist, das zur Ausbildung eines Dielektrikums fähig ist.

6. Anode nach einem der Ansprüche 1 bis 5,
bei der der Anodenableiter (9) die Form eines Blechstreifens mit einem Verhältnis Breite/Dicke zwischen 2 und 100 aufweist.

7. Elektrolyt-Kondensator mit einer Anode nach Anspruch 1 bis 6,
bei dem der Anodenkörper (1; 20) von einem Dielektrikum (2) umgeben ist, bei dem auf dem Dielektrikum (2) eine Schichtkathode (3) vorgesehen ist, bei dem ein weiterer Endabschnitt des Anodenableiters (9) zu einer ersten Anschlußlasche geformt ist und bei dem die Schichtkathode (3) mit einer zweiten Anschlußlasche verbunden ist.

8. Verfahren zur Herstellung einer Anode nach einem der Ansprüche 1 bis 6,
wobei ein kontinuierlich verformbares Material, das verfestigt werden kann, unter gleichzeitiger äußerer Formgebung an einen flächigen Anodenableiter (9) angeformt und anschließend zur Bildung eines Anodenkörpers (1; 20) verfestigt wird.

9. Verfahren nach Anspruch 8,
wobei eine Paste (18) aus einem Bindersystem und einem Pulver auf den Anodenableiter (9) aufgetragen und sodann getrocknet und gesintert wird.

10. Verfahren nach Anspruch 9,
wobei die Paste (18) unter Verwendung einer Schablone (11) durch Drucken aufgetragen wird.

11. Verfahren nach Anspruch 9,
wobei die Paste (18) durch Siebdrucken aufgetragen wird.

12. Verfahren nach einem der Ansprüche 9 bis 11,
wobei die Paste (18) beidseitig auf den Anodenableiter (9) aufgetragen wird.

13. Verfahren nach Anspruch 9,
wobei die Paste (18) mittels zweier Masken, von denen jede jeweils einer Seite des Anodenableiters (9) zugeordnet ist, auf den Anodenableiter (9) aufgetragen wird.

14. Verfahren nach Anspruch 13,
wobei ein einen Rand eines Loches der Maske überragendes Ende des Anodenableiters (9) mit einem Abstandhalter (17) abgestützt wird.

15. Verfahren nach Anspruch 9,
wobei die Paste (18) durch Umspritzen, Umpressen oder Umgießen auf den Anodenableiter (9) aufgetragen wird.

16. Verfahren nach Anspruch 9,
wobei aus der Paste (18) eine Grünfolie gefertigt wird, die zugeschnitten und mit dem Anodenableiter (9) verklebt wird.

17. Verfahren nach Anspruch 8,
wobei der Anodenableiter (9) mit einem Pulver umpreßt wird, so daß ein Preßling entsteht, aus dem der Anodenableiter (9) an einer Seite herausragt, und wobei der Preßling anschließend gesintert wird.

18. Verfahren nach Anspruch 17,
wobei der flächige Anodenableiter (9) vor dem Pressen in eine Pulverschüttung des Pulvers eingeschoben wird.

19. Verfahren nach Anspruch 17 oder 18,
wobei für den Anodenableiter (9) ein streifenförmiges Blech mit einem Verhältnis Breite/Dicke zwischen 2 und 100 verwendet wird.

20. Verfahren nach Anspruch 17 bis 19,
wobei für den Anodenableiter (9) eine Tantalfolie oder ein Tantalblech (10) vorgesehen wird.

21. Verfahren nach Anspruch 17 bis 20,
wobei für das Pulver ein Tantalpulver vorgesehen wird.

22. Verfahren nach einem der Ansprüche 17 bis 21,
wobei dem Pulver ein Additiv mit Schmierwirkung, insbesondere Kampfer, beigefügt wird.

23. Verfahren nach Anspruch 22,
wobei das Additiv vor dem Sintern entfernt wird.

## Claims

1. Anode for an electrolytic capacitor, having an anode body (1, 20) of fixedly predetermined form and having a large-area anode conductor (9), which is in the form of a sheet-metal strip having a width/thickness ratio of between 2 and 100,
- in which the anode body (1, 20) is arranged on both sides or main surfaces of the sheet-metal strip, and
- in which the anode body (1, 20) is moulded integrally on the anode conductor (9) from a continuously deformable material, which can be consolidated.

2. Anode according to Claim 1, in which the anode body (1; 20) completely surrounds one end section of the anode conductor (9).

3. Anode according to Claim 1 or 2, in which the anode body (1; 20) comprises an open-pore sintered body.

4. Anode according to Claim 3, in which the sintered body is produced from a metal, such as tantalum or niobium, or a metal alloy or another material which is able to form a dielectric.

5. Anode according to one of Claims 1 to 4, in which the anode conductor (9) is produced from a metal, such as tantalum or niobium, or a metal alloy or another material which is able to form a dielectric.

6. Anode according to one of Claims 1 to 5, in which the anode conductor (9) is in the form of a sheet-metal strip with a width/thickness ratio of between 2 and 100.

7. Electrolytic capacitor having an anode as claimed in Claims 1 to 6, in which the anode body (1; 20) is surrounded by a dielectric (2), in which a layered cathode (3) is provided on the dielectric (2), in which a further end section of the anode conductor (9) is shaped into a first connection lug and in which the layered cathode (3) is connected to a second connection lug.

8. Process for producing the anode as claimed in one of Claims 1 to 6, in which a continuously deformable material, which can be consolidated, is integrally moulded, with simultaneous external shaping, onto a large-area anode conductor (9) and is then consolidated to form an anode body (1; 20).

9. Process as claimed in Claim 8, in which a paste (18) comprising a binder system and a powder is applied to the anode conductor (9) and then dried and sintered.

10. Process as claimed in Claim 9, in which the paste (18) is applied by printing using a stencil (11).

11. Process as claimed in Claim 9, in which the paste (18) is applied by screen printing.

12. Process as claimed in one of Claims 9 to 11, in which the paste (18) is applied to both sides of the anode conductor (9).

13. Process as claimed in Claim 9, in which the paste (18) is applied to the anode conductor (9) by means of two masks, each of which is assigned to in each case one side of the anode conductor (9).

14. Process as claimed in Claim 13, in which an end of the anode conductor (9) which projects beyond an edge of a hole in the mask is supported by a spacer (17).

15. Process as claimed in Claim 9, in which the paste (18) is applied around the anode conductor (9) by injection moulding, pressing or casting.

16. Process as claimed in Claim 9, in which a green sheet is produced from the paste (18) and is then cut to size and adhesively bonded to the anode conductor (9).

17. Process as claimed in Claim 8, in which the anode conductor (9) is surrounded with a powder by pressing, so that a pressed body is formed, from which the anode conductor (9) projects on one side, and in which the pressed body is then sintered.

18. Process as claimed in Claim 17, in which the large-area anode conductor (9) is pushed into a bed of the powder before the pressing takes place.

19. Process as claimed in Claim 17 or 18, in which a metal sheet in strip form with a width/thickness ratio of between 2 and 100 is used for the anode conductor (9).

20. Process as claimed in Claims 17 to 19, in which a tantalum foil or a tantalum sheet (10) is provided for the anode conductor (9).

21. Process as claimed in Claims 17 to 20, in which a tantalum powder is provided for the powder.

22. Process as claimed in one of Claims 17 to 21, in which an additive with a lubricating action, in particular camphor, is added to the powder.

23. Process as claimed in Claim 22, in which the additive is removed prior to sintering.

## Revendications

1. Anode pour condensateur électrolytique, comprenant un corps (1, 20) d'anode d'une forme fixe donnée à l'avance et un conducteur (9) plat d'anode qui a la forme d'une bande de tôle ayant un rapport largeur/épaisseur compris entre 2 et 100
- dans laquelle le corps (1, 20) d'anode est disposé sur les deux faces ou surfaces principales de la bande de tôle et
- dans laquelle le corps (1, 20) d'anode est formé sur le conducteur (9) d'anode, et est en un matériau continuellement déformable, qui peut être consolidé.

2. Anode suivant la revendication 1,
dans laquelle le corps (1 ; 20 d'anode) entoure complètement un tronçon d'extrémité du conducteur (9) d'anode.

3. Anode suivant la revendication 1 ou 2,
dans laquelle le corps (1 ; 20) d'anode est en un corps fritté à pores ouverts.

4. Anode suivant la revendication 3
dans laquelle le corps fritté est en un métal comme le tantale ou le niobium ou en un alliage métallique ou en un autre matériau qui est apte à constituer un diélectrique.

5. Anode suivant l'une des revendications 1 à 4,
dans laquelle le conducteur (9) d'anode est en un métal comme le tantale ou le niobium ou en un alliage de métaux ou en un autre matériau qui est apte à constituer un diélectrique.

6. Anode suivant l'une des revendications 1 à 5,
dans laquelle le conducteur (9) d'anode a la forme d'une bande de tôle ayant un rapport largeur/épaisseur compris entre 2 et 100.

7. Condensateur électrolytique ayant une anode suivant la revendication 1 à 6,
dans lequel le corps (1 ; 20) d'anode est entouré d'un diélectrique (2), dans lequel il est prévu sur le diélectrique (2) une cathode (3) sous forme de couche, dans lequel un autre tronçon d'extrémité du conducteur (9) d'anode est conformé en une première patte formant borne, et dans lequel la cathode (3) sous forme de couche est reliée à une deuxième patte formant borne.

8. Procédé de fabrication d'une anode suivant l'une des revendications 1 à 6,
dans lequel on forme un matériau déformable continuellement, qui peut être consolidé, tout en le façonnant à l'extérieur, sur un conducteur (9) plat d'anode, et ensuite on le consolide pour la formation d'un corps (1 ; 20) d'anode.

9. Procédé suivant la revendication 8,
dans lequel on dépose une pâte (18) constituée d'un système liant et d'une poudre sur le conducteur (9) d'anode et on la sèche immédiatement et on la fritte.

10. Procédé suivant la revendication 9,
dans lequel on dépose par pression la pâte (18) en utilisant un gabarit (11).

11. Procédé suivant la revendication 9,
dans lequel on dépose la pâte (18) par sérigraphie.

12. Procédé suivant l'une des revendications 9 à 11,
dans lequel on dépose la pâte (18) des deux côtés du conducteur (9) d'anode.

13. Procédé suivant la revendication 9,
dans lequel on dépose sur le conducteur (9) d'anode la pâte (18) au moyen de deux masques, dont chacun est associé à respectivement un côté du conducteur d'anode.

14. Procédé suivant la revendication 13,
dans lequel on soutient par une entretoise (17) une extrémité du conducteur (9) d'anode, qui dépasse d'un bord d'un trou du masque.

15. Procédé suivant la revendication 9,
dans lequel on dépose la pâte (18) sur le conducteur (9) d'anode par extrusion, par enrobage, par moulage ou par enrobage par coulée.

16. Procédé suivant la revendication 9,
dans lequel on fabrique en la pâte (18) une feuille brute que l'on découpe et que l'on colle au conducteur (9) d'anode.

17. Procédé suivant la revendication 8,
dans lequel on enrobe par pression le conducteur (9) d'anode d'une poudre, de manière à créer une ébauche comprimée de laquelle fait saillie sur un côté le conducteur (9) d'anode, et dans lequel on fritte ensuite l'ébauche comprimée.

18. Procédé suivant la revendication 17,
dans lequel on introduit le conducteur (9) plat d'anode avant la compression dans un tas de la poudre.

19. Procédé suivant la revendication 17 ou 18,
dans lequel on utilise, pour le conducteur (9) d'anode, une tôle en forme de bande ayant un rapport largeur/épaisseur compris entre 2 et 100.

20. Procédé suivant la revendication 17 à 19,
dans lequel on prévoit, pour le conducteur (9) d'anode, une feuille de tantale ou une tôle en tantale.

21. Procédé suivant la revendication 17 à 20,
dans lequel on prévoit, pour la poudre, une poudre de tantale.

22. Procédé suivant l'une des revendications 17 à 21,
dans lequel on ajoute à la poudre un additif à effet lubrifiant, notamment du camphre.

23. Procédé suivant la revendication 22,
dans lequel on élimine l'additif avant le frittage.
